# EUROPEAN PATENT APPLICATION

(11) **EP 4 219 017 A1**
(43) Date of publication of application: **02.08.2023**
(21) Application number: 22201316.1
(22) Date of filing: 13.10.2022
(51) Int. Cl.: B02C 21/00, B02C 17/10, B02C 23/10, B02C 17/00

(54) **METHOD OF PULVERIZING WASTE MATERIAL**

(30) Priority: 28.01.2022 FI 20225075
(71) Applicant: EcoUp Oyj, 90100 Oulu (FI)
(72) Inventor: Hirvensalo, Ilari, Mäntsälä (FI); Lazarev, Juri, Turku (FI); Koponen, Markus, Porvoo (FI)
(74) Representative: Wilenius, Jami Juhani

(57) **Abstract**

A method of pulverizing waste material is disclosed. The method is based on an air flow (10) which transfers input waste material (20) and output particles (44), ensures proper feeding of waste material and thereby internal heating which, combined with the air flow, facilitates proper pulverization of the waste material in an energy-efficient manner.

## Description

### FIELD OF THE INVENTION

The invention relates to a method of reducing particle size of waste material for recycling the waste material.

### PRIOR ART

Construction materials used in buildings, constructions and other structures have a limited life span and are difficult to recycle at the end of their life span. Typically, the materials are either burned for energy or crushed and used as a filler. A better solution would be to use the materials again in new products.

Some waste materials are in a form of very fine particles, such as fly ash, which can be used in new materials, such as geopolymer concrete. Most construction materials would also be suitable for this purpose but they first have to be pulverized, i.e. ground to very fine particles. The pulverization has been found to be either very slow and thus not suitable for industrial scale production - or very energy-intensive and thus not sustainable.

WO20060708866 discloses a ground product manufacturing apparatus where the inside of the apparatus is brought to a pressurized turbulent state by wind power.

CN215390605U discloses a screening device for fertilizer production. The screening device is rotated while brushes, a high-pressure air pipe and a knocking mechanism remove material blocking the screen.

US2006289685 discloses a system and method for pulverizing and extracting moisture. A venturi is disclosed which receives incoming material and subjects the material to pulverization.

### BRIEF DESCRIPTION OF THE INVENTION

The object of the invention is a method which alleviate the drawbacks of the prior art. The method is based on an air flow which transfers input waste material and output particles, ensures proper feeding of waste material and thereby internal heating which, combined with the air flow, facilitates proper pulverization of the waste material in an energy-efficient manner.

### BRIEF DESCRIPTION OF THE FIGURES

The invention is now described in more detail in connection with preferred embodiments, with reference to the accompanying drawings, in which:
Fig. 1 shows a flowchart of a method according to an embodiment;
Fig. 2 shows a flowchart of a method according to an embodiment; and
Fig. 3 illustrates a system for carrying out a method according to an embodiment;

### DETAILED DESCRIPTION OF THE INVENTION

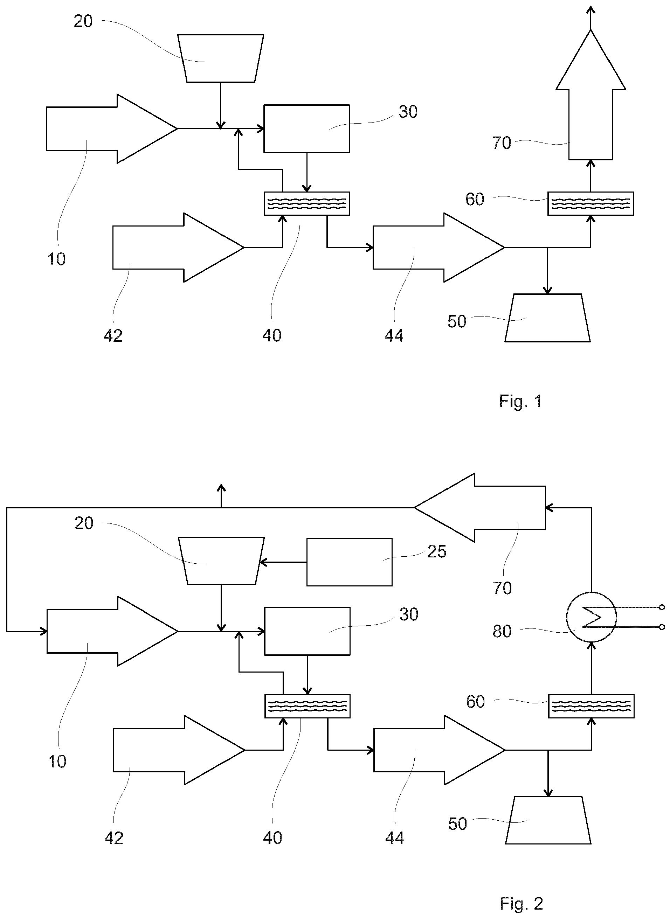

Figure 1 shows a simplified flow chart of a method of pulverizing waste material, according to an embodiment of the invention.

The method of pulverizing waste material comprises a step of providing an input air flow 10 into a pulverizing system. The pulverizing system comprises one or more blowers, fans, compressors or other means for generating an air flow; one or more containers, silos, receptacles or other means for storing input material and output material; one or more filters, screens, sieves or other means for filtering particles from an air flow; one or more grinders, crushers, ball mills or other means for pulverizing materials; and pipes, tubes or ducts between one or more of the mentioned parts of the system. The configuration of the system is not limited to the afore-mentioned parts and the system may also comprise various other parts with the same or different functions as the ones already mentioned. For example, valves, cyclones, heat exchangers, scales, sensors, automation devices and other auxiliary devices can be used for executing the method without departing from the scope of the invention.

The method comprises a step of providing an input of the waste material 20 into the input air flow. There are multiple ways to implement the functional requirements of this step. For example, the waste material can be released from a silo or input using a screw feeder into a pipe or duct of the input air flow. In an embodiment, mass of the input waste material is measured and the input is adjusted for a desired input flow rate. The input is preferably a continuous input with a variable rate of input instead of a batch input. The input flow is preferably variable either manually or automatically based on operation of the system. For example, if a congestion is detected in some part of the system, the input rate is set to zero or a very low level until the congestion has been resolved.

The method further comprises a step of pulverizing 30 said waste material that has been introduced into the pulverizing system within the input air flow. The pulverizing takes place in a ball mill. The waste material input within the input air flow ensures that the waste material is loose and quickly spreads within the ball mill. This an important aspect for proper pulverization and heat generation inside the ball mill. The generated heat and the air flow facilitate drying of the waste material as it is being pulverized. If the waste material input is too fast or if the waste material is fed into the ball mill in tightly packed lumps, e.g. using a screw feeder, the waste material is too dense and it dampens impacts of balls in the ball mill. This results in poor performance and low temperature which degrades the performance even more.

In order to achieve best results, a ball mill setup needs to be configured for each waste material. These variations include for example number of chambers within the ball mill, size and shape of lifters and size, shape and number of balls.

A further step of the method is generating heat by internal friction of the pulverizing system. Typically, the heat generation by friction takes place in the ball mill or other grinding device where majority of the power of the pulverizing system is used. Internal friction between balls or pebbles of the ball mill, the walls of the ball mill and the material inside the ball mill results heating of the inside of the ball mill if the waste material inside the ball mill is loose enough and there isn't too much of waste material being pulverized. This heat, together with an air flow through the ball mill, facilitates drying of the material inside the ball mill. Without the flow of air and the generated heat, the waste material inside the ball mill will not be properly dried. Any excess heat can be used later in the process or it can be transferred to other systems with a heat exchanger. Preferably, an insulated ball mill is used to prevent heat generated in the ball mill from being released through exterior walls of the ball mill. For example, a double-walled ball mill with an insulation layer between the two walls is not only an efficient thermal insulation but also reduces noise generated by the ball mill.

The method further comprises a step of continuously extracting pulverized waste material into an output air flow 44 by suction of air through a screen 40. The extracted pulverized waste material having a particle size equal or smaller than a predetermined particle size will be able to go through the screen 40 when suction is applied. On the contrary, partially pulverized waste material having a particle size larger than a predetermined particle size will not be able to go through the screen and can be stuck against the screen when suction is applied. Said predetermined particle size is for example at most 150 micrometres, preferably at most 100 micrometres and more preferably at most 50 micrometres. In case of the particles being fibres, the particle size may refer to the length of the fibre. There will always be smaller particles in the output than the predetermined particle size. For example, if the predetermined particle size would be 100 micrometres, a screen with a pore size of about 100 micrometres could be used and the output would include particles having particle sizes of 0 to 100 micrometres. In most cases shorter fibres, i.e. smaller particle sizes are preferred. However, a screen with very small pore size often becomes clogged more rapidly so there is a trade-off between particle size and output capacity.

Due to the suction pulling fine particles through the screen and coarse particles against the screen and thereby coarse particles eventually clogging the screen, the method comprises a step of continuously declogging said screen. The declogging can be realized by a flow of cleaning air and thereby returning the coarse particles of waste materials to the ball mill and continuing to pulverize waste material having particle size larger than the predetermined particle size. Preferably the direction of the flow of the cleaning air is opposite to a direction of the output air flow by suction. Thus, the flow of cleaning air releases the coarse particles from the screen and pulverization of those particles will continue. The cleaning air can be compressed air from a compressor or an air flow created by fans or blowers or the like. A flow rate and velocity of the cleaning air should be adjusted to be high enough for declogging the screen. In an embodiment, the cleaning air is released through an elongated slit. The slit is preferably arranged to move in relation to the screen during declogging of the screen, e.g. by rotating motion so that essentially the whole screen is covered.

The declogging of the screen is preferably facilitated with one or more vibrating devices vibrating the screen. The most efficient solution is a continuous flow of cleaning air in combination with a continuous vibration of the screen. The vibrating devices can be active or passive. Due to a simpler structure, passive vibrating devices, i.e. without power source, are preferred.

The screening can be realized, for example, by using a screening device that is fully or partially inside a ball mill. The screening device may comprise a screen cloth for separating fine particles having equal to or smaller than the desired particle size from source waste material. The screen cloth is preferably the outermost part of the screening device and designed to be easily removable from the screening device so that the screen cloth can be replaced with a different one if source material changes or if a screened fraction of a different size distribution is desired. The screen cloth can have a shape of a hollow right circular cylinder having a closed end and an open end. A screen cloth of this shape can be easily slid onto the screening device and it has a largely surface area for screening the source material.

Size of openings in the screen cloth, i.e. a pore size defines size of particles of the screened fraction that passes through the screen cloth. Preferably, the screen cloth has a pore size of at least 30 micrometers and at most 1000 micrometers.

The screening device may further comprise a perforated support structure for supporting the screen cloth. The perforated support structure keeps the screen cloth in a tubular shape and prevents it from collapsing when suction is applied. The support structure is preferably a metal wire mesh, metal lath or an expanded perforated metal sheet.

The method further comprises a step of separating at least part of the extracted pulverized waste material from the output air flow. This separation of the fine particles from the airflow can be performed for example with a cyclone separator and the separated particles can easily be collected to a container such as a silo beneath the cyclone separator. The separation can be only partial separation meaning that the air flow after the cyclone separator may still contain some residual particles.

As a last step of the method of this embodiment, the residual particles of the extracted pulverized recycled material are filtered from the output air flow. Typical filters for fine particles can be used. The output air flow can be released from the system after filtering or circulated into the input of the pulverizing system.

Figure 2 shows a flow chart of a method of pulverizing waste material, according to an embodiment of the invention. The flow chart has the same basic principle but is more energy efficient compared to the embodiment of Figure 1.

The method related to the embodiment of Figure 2 is also a method of pulverizing waste material and it comprises a step of providing an input air flow 10 into a pulverizing system and a step of providing an input of the waste material 20 into the input air flow. Similar to the embodiment of Figure 1, there are multiple ways to implement the functional requirements of this step. For example, the waste material can be released from two silos in alternating manner into a pipe or duct of the input air flow. As one silo is being filled with waste material, the other is used for input of material until it's empty and then the order is reversed. In an embodiment, mass of the input waste material is measured and the input is adjusted for a desired input flow rate. Use of two silos allows for constant measuring of the input because new material only added to the silo that is not currently providing input to the system. The input is preferably a continuous input with a variable rate of input instead of a batch input. The input flow is preferably variable either manually or automatically based on operation of the system. For example, if a congestion is detected in some part of the system, the input rate is set to zero or a very low level until the congestion has been resolved.

The method preferably comprises a step of pre-processing 25 the waste material prior to introducing the waste material into the input air flow. The pre-processing preferably comprises at least one of the following: drying of the waste material, purifying the waste material and reducing particle size of the waste material.

During pre-processing, drying of the waste material means removing moisture from the waste material, preferably by using heat generated in the pulverization process. If the waste material is dry enough already, the drying process scan be omitted. A desired water content of the waste material depends on details of a system for carrying out the method. In an attempt to pulverize waste material that is too moist for the process, a paste or a slurry is formed instead of loose fine particles. In the case of paste or slurry being formed, heat generation within the ball mill is significantly lower so the problem will not resolve itself. After drying, the waste material has a water content of at most 40 weight-%, preferably at most 30 weight-% or at most 25 weight-%.

Purifying of the waste material during pre-processing aims to produce a homogenous end product that can be used for new products and materials. A desired or required level of purity depends on the waste material and its future use but in general, a purity of at least 90 weight-%, preferably at least 95 weight-% or even 98 weight-% is desirable. Taking into consideration that the method concerns pulverization of waste material, 100 % purity can rarely be reached without sacrificing performance. The purifying step preferably aims to remove unwanted materials that are typically present with certain wanted materials. For example, removing plaster, paper and cardboard from gypsum waste, removing metal and plastic from wool waste, removing metal reinforcements from concrete waste, removing wood and plastic from glass waste, etc. An acceptable level of impurities does not prevent proper pulverization and later use of the pulverized waste.

Pre-processing may also involve reducing a particle size of the waste material to a desired particle size. The desired particle size varies depending on the waste material and further processing of the material. Typically, a proper and efficient pulverization of materials requires particle sizes of 40 mm or less, preferably 20 mm or less and most preferably 10 mm or less. Any reduction of particle size prior to the pulverization step facilitates the pulverization. The pulverization system defines to which particle size the waste material should be pre-processed to achieve maximum overall efficiency of the system. The particle size reduction in pre-processing may be a result of crushing, tearing or cutting the waste material.

The method further comprises a step of pulverizing 30 said waste material that has been introduced within the input air flow of the pulverizing system either with pre-processing or without pre-processing. The pulverizing preferably takes place in a ball mill, but also other types of grinding and crushing devices can be used. The waste material input within the input air flow ensures that the waste material is loose and quickly spreads within the ball mill. This an important aspect for proper pulverization and heat generation inside the ball mill. The generated heat and the air flow facilitate drying of the waste material as it is being pulverized. If the waste material input is too fast or if the waste material is fed into the ball mill in tightly packed lumps, e.g. using a screw feeder, the waste material is too dense and it dampens impacts of balls in the ball mill. This results in poor performance and low temperature which degrades the performance even more.

In order to achieve best results, a ball mill setup needs to be configured for each waste material. These variations include for example number of chambers within the ball mill, size and shape of lifters and size, shape and number of balls.

A further step of the method is generating heat by internal friction of the pulverizing system. Typically, the heat generation by friction takes place in the ball mill or other grinding device where majority of the power of the pulverizing system is used. Internal friction between balls or pebbles of the ball mill, the walls of the ball mill and the material inside the ball mill results heating of the inside of the ball mill if the waste material inside the ball mill is loose enough and there isn't too much of waste material being pulverized. This heat, together with an air flow through the ball mill, facilitates drying of the material inside the ball mill. Without the flow of air and the generated heat, the waste material inside the ball mill will not be properly dried. Any excess heat can be used later in the process or it can be transferred to other systems with a heat exchanger. Preferably, an insulated ball mill is used to prevent heat generated in the ball mill from being released through exterior walls of the ball mill. For example, a double-walled ball mill with an insulation layer between the two walls also reduces noise generated by the ball mill.

The method further comprises a step of continuously extracting pulverized waste material into an output air flow 44 by suction of air through a screen 40. The extracted pulverized waste material having a particle size equal or smaller than a predetermined particle size will be able to go through the screen 40 when suction is applied. On the contrary, partially pulverized waste material having a particle size larger than a predetermined particle size will not be able to go through the screen and can be stuck against the screen when suction is applied. Said predetermined particle size is for example at most 150 micrometres, preferably at most 100 micrometres and more preferably at most 50 micrometres. In case of the particles being fibres, the particle size may refer to the length of the fibre. There will always be smaller particles in the output than the predetermined particle size. For example, if the predetermined particle size would be 100 micrometres, a screen with a pore size of about 100 micrometres could be used and the output would include particles having particle sizes of 0 to 100 micrometres. In most cases shorter fibres, i.e. smaller particle sizes are preferred. However, a screen with very small pore size often becomes clogged more rapidly so there is a trade-off between particle size and output capacity.

Due to the suction pulling fine particles through the screen and coarse particles against the screen and thereby coarse particles eventually clogging the screen, the method comprises a step of continuously declogging said screen. The declogging is realized by a flow of cleaning air and thereby returning the coarse particles of waste materials to the ball mill and continuing to pulverize waste material having particle size larger than the predetermined particle size. Preferably the direction of the flow of the cleaning air is opposite to a direction of the output air flow by suction. Thus, the flow of cleaning air releases the coarse particles from the screen and pulverization of those particles will continue. The cleaning air can be compressed air from a compressor or an air flow created by fans or blowers or the like. A flow rate and velocity of the cleaning air should be adjusted to be high enough for declogging the screen. In an embodiment, the cleaning air is released through an elongated slit. The slit is preferably arranged to move in relation to the screen during declogging of the screen, e.g. by rotating motion so that essentially the whole screen is covered.

The declogging of the screen is preferably facilitated with one or more vibrating devices vibrating the screen. The most efficient solution is a continuous flow of cleaning air in combination with a continuous vibration of the screen. The vibrating devices can be active or passive. Due to a simpler structure, passive vibrating devices, i.e. without power source, are preferred.

The screening can be realized, for example, by using a screening device that is fully or partially inside a ball mill. The screening device may comprise a screen cloth for separating fine particles having equal to or smaller than the desired particle size from source waste material. The screen cloth is preferably the outermost part of the screening device and designed to be easily removable from the screening device so that the screen cloth can be replaced with a different one if source material changes or if a screened fraction of a different size distribution is desired. The screen cloth can have a shape of a hollow right circular cylinder having a closed end and an open end. A screen cloth of this shape can be easily slid onto the screening device and it has a largely surface area for screening the source material.

Size of openings in the screen cloth, i.e. a pore size defines size of particles of the screened fraction that passes through the screen cloth. Preferably, the screen cloth has a pore size of at least 30 micrometers and at most 1000 micrometers.

The screening device may further comprise a perforated support structure for supporting the screen cloth. The perforated support structure keeps the screen cloth in a tubular shape and prevents it from collapsing when suction is applied. The support structure is preferably a metal wire mesh, metal lath or an expanded perforated metal sheet.

The method further comprises a step of separating at least part of the extracted pulverized waste material from the output air flow. This separation of the fine particles from the airflow can be performed for example with a cyclone separator and the separated particles can easily be collected to a container such as a silo beneath the cyclone separator. The separation can be only partial separation meaning that the air flow after the cyclone separator may still contain some residual particles.

In the next optional step of the method of this embodiment, the residual particles of the extracted pulverized recycled material are filtered from the output air flow. Typical filters for fine particles can be used. The output air flow is essentially clean of particles and it can be directed to flow through a heat exchanger for extracting heat 80 from the output air flow. The extracted heat can be used in pre-processing of the incoming waste material, to other processes within the same facility, to heat nearby buildings or for other purposes. Typical heat exchanger solutions can be used depending on requirements of the system.

Preferably at least part of the output air flow 70 is directed into the input air flow after filtering and possible heat extraction. Since the declogging of the screen may increase the amount of air in the system, a part of the output air flow can be released or used as the cleaning air for declogging the screen. Either way, the input air flow and the output air flow are components of a closed-circuit air flow which circulates the same air from input to output and back to input. This arrangement saves energy as the input air would already be warm. Preferably, the suction of air in the screening of pulverized waste material is used to enhance the input air flow. It is preferable that any components or devices between the suction for screening and the input air flow do not drastically decrease velocity of the air flow.

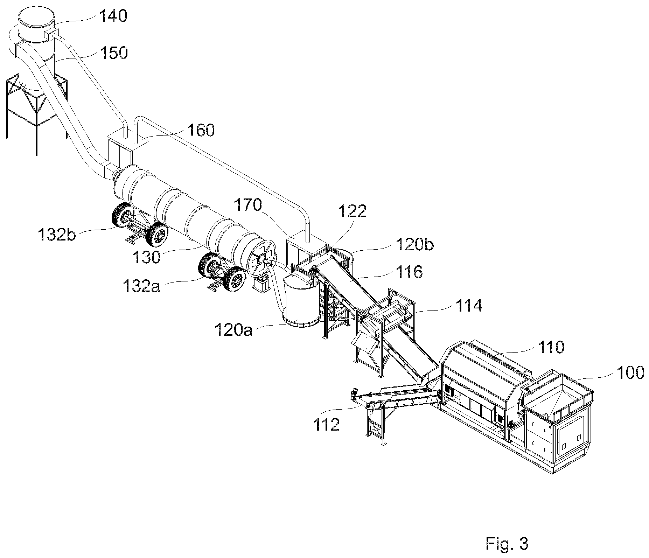

Figure 3 illustrates an exemplary system suitable for carrying out a method according to an embodiment of the invention. The invention concerns a method and is not limited by this exemplary embodiment of a system. The exemplary system of Figure 3 comprises a pre-processing system (100-116) and a pulverizing system (120a/b-170).

The pre-processing system comprises an input feeder 100 for waste material, which input feeder includes a funnel and a feeding device, such as a screw feeder. The input feeder inputs the waste material into a rotary screen 110. The rotary screen may have a screen pore size from about 5 millimetres to about 50 millimetres, depending on the waste material. The rotary screen may include some type of a shredding or crushing device to decrease particle size of the input waste material. The rotary screen may also include a heating device for drying the waste material. The waste material passing the rotary screen will fall onto a first conveyor belt 116. Any debris and too large particles will be taken out from the system using a second conveyor belt 112. And finally, a magnetic separator 114 can be used on top of the first conveyor belt 116 to pick up any magnetic waste materials from the first conveyor belt 116 before the pre-processed waste material enters the pulverizing system.

In the pulverizing system, the pre-processed waste material from the first conveyor belt 116 falls to a third conveyor belt 122 which transfers the waste material into a first silo 120a or to a second silo 120b depending on running direction of the third conveyor belt 122. A blower unit 170 creates an input air flow through the bottom part of one of the silos 120a/b at a time and blows waste material into a ball mill 130. The ball mill is rotated with one or more rotating units 132a;132b. A screen is located inside the ball mill 130 for screening pulverized waste material into an output air flow flowing through an output channel which leads to a cyclone separator 140. The cyclone separator separates most of the particles from the output air flow and there may be one or more suction blowers in connection with the cyclone separator to strengthen the output air flow. An output silo 150 is arranged below the cyclone separator and the separated particles will fall into the output silo. A duct leads from the cyclone separator 140 into a fine particle filter unit 160 which filters residue particles from the output air flow. There may be one or more blowers or compressors in the particle filter unit for creating cleaning air flow from the filtered output air flow and the cleaning air flow is led to the screen for declogging the screen. And finally, a duct leads the remaining filtered output air flow into the blower unit 170 in which the filtered output air flow is used as an input air flow to complete a circulation of air within the pulverizing system.

It is obvious to the skilled person in the art that, as technology develops, the basic idea of the invention can be implemented in various ways. The invention and its embodiments are therefore not limited to only the examples presented above, rather they may vary within the scope of the claims.

## Claims

1. Method of pulverizing waste material, wherein the method comprises steps of:
providing an input air flow into a pulverizing system,
providing an input of the waste material into the input air flow,
pulverizing said waste material in a ball mill of the pulverizing system,
generating heat by internal friction of said pulverizing system,
the method being **characterized in that** the method further comprises steps of:
continuously extracting pulverized waste material into an output air flow by suction of air through a screen, the extracted pulverized waste material having a particle size equal or smaller than a predetermined particle size,
continuously declogging said screen by a flow of cleaning air and thereby continuing to pulverize waste material having particle size larger than the predetermined particle size,
separating at least part of the extracted pulverized waste material from the output air flow, and
filtering residual particles of the extracted pulverized recycled material from the output air flow.

2. The method of claim 1, wherein the method further comprises a step of extracting heat from the output air flow.

3. The method of claim 1 or 2, wherein said waste material is pre-processed waste material, where the pre-processing comprises at least one of the following: drying of the waste material, purifying the waste material, reducing particle size of the waste material.

4. The method of any one of claims 1 to 3, wherein said waste material is pre-processed waste material having water content of at most 30 weight-%.

5. The method of any one of claims 1 to 4, wherein said waste material is pre-processed waste material having purity of at least 95 weight-%.

6. The method of any one of claims 1 to 5, wherein said waste material is pre-processed waste material having particle sizes up to 20 mm.

7. The method of any one of claims 1 to 6, wherein the method further comprises a step of directing at least part of the output air flow into the input air flow.

8. The method of any one of claims 1 to 7, wherein the input air flow and the output air flow are components of a closed-circuit air flow.

9. The method of any one of claims 1 to 8, wherein the method further comprises a step of using said suction of air facilitating the output air flow for enhancing the input air flow.

10. The method of any one of claims 1 to 9, wherein a direction of said flow of cleaning air in the step of continuous declogging of the screen is opposite to a direction of the output air flow.

11. The method of any one of claims 1 to 10, wherein said flow of cleaning air is released through an elongated slit in the step of continuous declogging of the screen.

12. The method of any one of claims 1 to 11, wherein said step of continuous declogging of screen comprises continuously vibrating the screen.
